# EUROPEAN PATENT APPLICATION

(11) **EP 4 357 986 A1**
(43) Date of publication of application: **24.04.2024**
(21) Application number: 22858649.1
(22) Date of filing: 03.08.2022
(51) Int. Cl.: G06N 20/20, G06N 3/04, G06N 3/08

(54) **ELECTRONIC DEVICE FOR PROVIDING INFORMATION FOR REINFORCED LEARNING AND METHOD FOR OPERATING SAME**

(30) Priority: 19.08.2021 KR 20210109360
(71) Applicant: Samsung Electronics Co., Ltd., Suwon-si, Gyeonggi-do 16677 (KR)
(72) Inventor: LEE, Hoejoo, Suwon-si Gyeonggi-do 16677 (KR); JANG, Youngcheol, Suwon-si Gyeonggi-do 16677 (KR)
(74) Representative: Gulde & Partner
(86) International application number: PCT/KR2022/011474
(87) International publication number: WO 2023/022411

(57) **Abstract**

According to various embodiments, a method of operating an electronic device may include: storing at least one value corresponding to each of at least one parameter associated with a radio access network (RAN), and information associated with an operation performed by the RAN. A value corresponding to at least some parameters among the at least one parameter may be used when at least one operation determination model executed by the electronic device determines at least a part of the information associated with the operation. The method of the electronic device may further include: identifying a request for experience information for learning a first operation determination model from a first learning learner for learning the first operation determination model among the at least one operation determination model, identifying, from the at least one value, a value corresponding to at least one first parameter corresponding to the first operation determination model and information associated with an operation corresponding to the at least one first parameter, in response to the request, and providing at least some among the value corresponding to the at least one first parameter, the information associated with the operation corresponding to the at least one first parameter, and a reward value identified based on at least a part of the value corresponding to the at least one first parameter, to the first learning learner as the experience information.

## Description

### [Technical Field]

The disclosure relates to an electronic device for providing information for reinforcement learning and an operation method therefor, for example, the disclosure relates to an electronic device for providing experience data for reinforcement learning by an agent that controls a radio access network (RAN) and an operation method therefor.

### [Background Art]

An existing base station is embodied in the form in which a data processor (distributed unit (DU)) of the base station and a wireless transceiver (radio unit or remote unit (RU)) are installed together in a cell site. However, such integrated embodied form may have a physical limitation. For example, as the number of service subscribers or traffic increases, a business operator needs to establish a new base station in a cell site. To overcome the above-described drawback, a centralized radio access network (RAN) or cloud RAN (C-RAN) structure has been embodied. The C-RAN may have a structure in which a DU is disposed in a single physical place, and an RU is disposed in a cell site where transmission or reception of a radio signal is actually performed with a user equipment (UE). The DU and the RU may be connected via an optical cable or coaxial cable. Since the RU and the DU are separated, an interface standard for communication therebetween is needed, and the standard such as a common public radio interface (CPRI) or the like may be used between the RU and the DU. In 3^{rd} generation partnership project (3GPP), a base station structure has been standardized, and an open radio access network (O-RAN) which is an open network standard applicable to a 5G system has been discussed.

In the O-RAN, an RU, DU, central unit-control plane (CU-CP), and a central unit-user plane (CU-UP) which are existing 3GPP NEs are newly defined as an O-RU, O-DU, O-CU-CP, and O-CU-UP, respectively (they are commonly called an O-RAN base station). In addition, an RAN intelligent controller (RIC) and a non-real-time RAN intelligent controller (NRT-RIC) are additionally proposed. An RIC may include a reinforcement learning (RL) agent (RL agent). An RL agent may receive data input from an RAN via an E2 interface, and may output an operation associated with the RAN. An RAN may operate based on an output from an RL agent. The RL agent may be based on an reinforcement learning model, and the reinforcement learning model may be updated via reinforcement learning. The RL agent may produce a parameter associated with an RAN (e.g., key performance indicators (KPI)), a performed operation, and a reward value, as experience information for reinforcement learning.

### [Detailed Description of the Invention]

### [Technical Problem]

When experience information is produced by an RL agent, experience information may be subordinate to the RL agent. For example, experience information associated with a KPI, excluding an KPI that the RL agent uses, is incapable of being produced. Accordingly, there may be the constraint on generation of experience information. In addition, if a plurality of RL agents exist, each of the plurality of RL agents may produce experience information. At least some of the KPIs used by the plurality of RL agents may be used in common. Accordingly, experience information produced by the plurality of RL agents may include duplicate data, which may constrain on resource operation.

Embodiments of the disclosure provide an electronic device and an operation method therefor which may produce experience information with reference to a KPI table in response to a request from an RL learner.

### [Technical Solution]

According to various example embodiments, a method of operating an electronic device may include: storing at least one value corresponding to each of at least one parameter associated with a radio access network (RAN), and information associated with an operation performed by the RAN. A value corresponding to at least some parameters among the at least one parameter may be used when at least one operation determination model executed by the electronic device determines at least a part of the information associated with the operation. The method of operating the electronic device may include: identifying a request for experience information for learning a first operation determination model, from a first learning learner for learning the first operation determination model among the at least one operation determination model, identifying, from the at least one value, a value corresponding to at least one first parameter corresponding to the first operation determination model and information associated with an operation corresponding to the at least one first parameter, in response to the request, and providing at least some among the value corresponding to the at least one first parameter, the information associated with the operation corresponding to the at least one first parameter, and a reward value identified based on at least a part of the value corresponding to the at least one first parameter, to the first learning learner as the experience information.

According to various example embodiments, an electronic device may include: a storage device, at least one processor operatively connected to the storage device, wherein the at least one processor is configured to: store, in the storage device, at least one value corresponding to each of at least one parameter associated with a radio access network (RAN), and information associated with an operation performed by the RAN. A value corresponding to at least some parameters among the at least one parameter may be used when at least one operation determination model executed by the electronic device determines at least a part of the information associated with the operation. The at least one processor may be further configured to: identify a request for experience information for learning a first operation determination model from a first learning leaner for learning the first operation determination model among the at least one operation determination model, identify a value corresponding to at least one first parameter corresponding to the first operation determination model among the at least one value and information associated with an operation corresponding to the at least one first parameter, in response to the request, and provide at least some among the value corresponding to the at least one first parameter, the information associated with the operation corresponding to the at least one first parameter, and a reward value identified based on at least a part of the value corresponding to the at least one first parameter, to the first learning learner as the experience information.

According to various example embodiments, a method of operating an electronic device may include: storing a key performance indicator (KPI) table in which at least one value corresponding to each of at least one parameter associated with a radio access network (RAN), and information associated with an operation performed by the RAN are classified for each of a plurality of points of time. A value corresponding to at least some parameters among the at least one parameter may be used when at least one operation determination model executed by the electronic device determines at least a part of the information associated with the operation. The method of operating the electronic device may further include: detecting an event for updating a first operation determination model among the at least one operation determination model, identifying a value corresponding to at least one first parameter corresponding to the first operation determination model and information associated with an operation corresponding to the at least one first parameter, by referring to the KPI, in response to the event detection, and providing at least some among the value corresponding to the at least one first parameter, the information associated with the operation corresponding to the at least one first parameter, and a reward value identified based on at least a part of the value corresponding to the at least one first parameter, to a first learning leaner for learning the first operation determination model as the experience information.

According to various example embodiments, an electronic device may include: a storage device, and at least one processor operatively connected to the storage device, wherein the at least one processor is configured to: store, in the storage device, a key performance indicator (KPI) table in which at least one value corresponding to each of at least one parameter associated with a radio access network (RAN), and information associated with an operation performed by the RAN are classified for each of a plurality of points in time. A value corresponding to at least some parameters among the at least one parameter may be used when at least one operation determination model executed by the electronic device determines at least a part of the information associated with the operation. The at least one processor may be configured to: detect an event for updating a first operation determination model among the at least one operation determination model, identify a value corresponding to at least one first parameter corresponding to the first operation determination model and information associated with an operation corresponding to the at least one first parameter by referring to the KPI in response to the event detection, and provide at least some among the value corresponding to the at least one first parameter, the information associated with the operation corresponding to the at least one first parameter, and a reward value identified based on at least a part of the value corresponding to the at least one first parameter, to a first learning leaner for learning the first operation determination model as the experience information.

### [Advantageous Effects]

According to various example embodiments, there may be provided an electronic device for producing experience information with reference to a KPI table in response to a request from a reinforcement learning (RL) learner, and an operation method therefor. Accordingly, experience information may be freely configured. In addition, the possibility of occurrence of duplicate data in experience information may be low.

### [Brief Description of Drawings]

The above and other aspects, features and advantages of certain embodiments of the present disclosure will be more apparent from the following detailed description, taken in conjunction with the accompanying drawings, in which:
FIG. 1A is a block diagram illustrating an example configuration of a radio access network intelligent controller (RIC), a radio access network (RAN), and a core network (CN) according to various embodiments;
FIG. 1B is a block diagram illustrating an example configuration of an RIC according to various embodiments;
FIG. 1C is a block diagram illustrating an example hardware configuration of an RIC according to various embodiments;
FIG. 2A is a block diagram illustrating an example configuration of an RIC according to a comparative example for comparison with various embodiments;
FIG. 2B is a block diagram illustrating an example production of experience data by a plurality of RL agents according to a comparative example for comparison with various embodiments;
FIG. 3 is a block diagram illustrating an example configuration of an RIC according to various embodiments;
FIG. 4 is a flowchart illustrating an example method of operating an electronic device according to various embodiments;
FIG. 5 is a block diagram illustrating an example configuration of an RIC according to various embodiments;
FIG. 6 is a flowchart illustrating an example method of operating an electronic device according to various embodiments;
FIG. 7 is a flowchart illustrating an example method of operating an electronic device according to various embodiments;
FIG. 8 is a flowchart illustrating an example method of operating an electronic device according to various embodiments;
FIG. 9 is a flowchart illustrating an example method of operating an electronic device according to various embodiments;
FIG. 10 is a flowchart illustrating an example method of operating an electronic device according to various embodiments; and
FIG. 11 is a flowchart illustrating an example method of operating an electronic device according to various embodiments.

### [Mode for Carrying out the Invention]

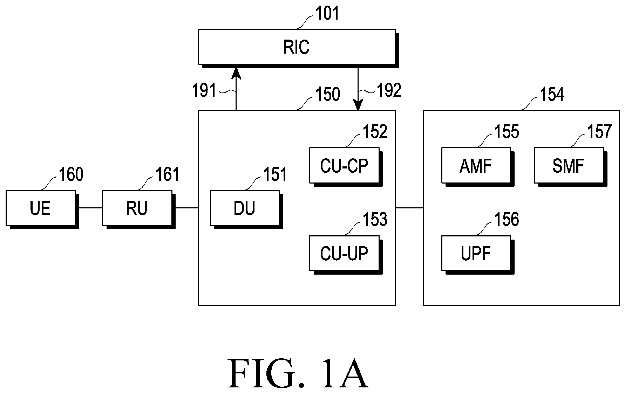

FIG. 1A is a block diagram illustrating a radio access network intelligent controller (RIC), an RAN, and a core network (CN) according to various embodiments.

According to various embodiments, an RAN 150 may include at least one among at least one distributed unit (DU) 151, at least one central unit-control plane (CU-CP) 152, or at least one central unit-user plane (CU-UP) 153. Although it is illustrated that the RAN 150 is connected to at least one remote unit (RU) (or radio unit) 161, this is merely an example. At least one RU 161 may be connected to the RAN 150 or may be included in the RAN 150. The RAN 150 may be an O-RAN. In this instance, the DU 151 may be an O-DU, the CU-CP 152 may be an O-CU-CP, the CU-UP 153 may be an O-CU-UP, and the RU 161 may be an O-RU.

According to various embodiments, the RU 161 may perform communication with a user equipment (UE) 160. The RU 161 may be a logical node that provides a low physical layer (low-PHY) function and RF processing. The DU 151 may be a logical node that provides functions of an RLC, an MAC, and a high-physical layer (high-PHY), and may be connected to, for example, the RU 161. The CU 152 and 153 may be logical nodes that provides functions of a radio resource control (RRC), a service data adaptation protocol (SDAP), and a packet data convergence protocol (PDCP). The CU-CP 152 may be a logical node that provides a function of a control plane part of an RRC and a PDCP. The CU-UP 153 may be a logical node that provides a function of a user plane part of an SDAP and a PDCP.

According to various embodiments, a core network (e.g., 5GC 5^{th} generation core) 154 may include at least one of an access and mobility management function (AMF) 155, a user plane function (UPF) 156, or a session management function (SMF) 157. The AMF 155 may provide a function for accessing in a unit of the UE 160, and mobility management. The SMF 156 may provide a session management function. The UPF 156 may transfer downlink data received from a data network to the UE 160, or may transfer uplink data received from the UE 160 to a data network. For example, the CU-CP 152 may be connected to the AMF 155 and an N2 interface (or NGAP interface). The AMF 155 may be connected to the SMF 157 via an N11 interface. The CU-UP 153 may be connected to the UPF 153 via an N3 interface.

According to various embodiments, an RAN intelligent controller (RIC) 101 may customize RAN functionality for service or regional resource optimization. The RIC 101 may provide at least one function among network intelligence (e.g., policy enforcement, handover optimization), resource assurance (e.g., radio-link management, advanced self-organized-network (advanced SON)), resource control (e.g., load balancing or slicing policy), and a function (or a performed operation) associated with the RAN 150 that the RIC 101 is capable of providing is not limited.

According to various embodiments, the RIC 101 may perform transmission and/or reception of E2 message 191 and 192 with RAN 150. For example, the RIC 101 may be connected to the DU 151 via an E2-DU interface. For example, the RIC 101 may be connected to the CU-CP 152 via an E2-CP interface. For example, the RIC 101 may be connected to the CU-UP 153 via an E2-UP interface. At least one interface between the RIC 101 and the RAN 150 may be referred to as an E2 interface. Although the RIC 101 is illustrated as a device separate from the RAN 150, this is merely an example, and the RIC 101 may be embodied as a device separate from the RAN 150 or may be embodied as a single device.

According to various embodiments, the RIC 101 may perform transmission and/or reception of the E2 message 191 and 192 with an E2 node (e.g., at least one of the DU 151, the CU-CP 152, or the CU-UP 153). The E2 node may include (or provide) an E2 node function. The E2 node function may be configured based on predetermined xApp (application S/W) installed in the RIC 101. If a KPI monitor function is provided, KPI monitor collecting S/W may be installed in the RIC 101. The E2 node may produce KPI parameters, and may include an E2 node function that transfers the E2 message 191 including a KPI parameter to an E2 termination function located in the RIC 101. As the termination of the RIC 101 for an E2 message, the E2 termination function located in the RIC 101 may interpret the E2 message transferred from the E2 node, and may transfer the same to xApp. The RIC 101 may provide the information associated with an operation of the RAN 150 to the RAN 150 as the E2 message 192. The RL agent of the RIC 101 may obtain at least some of the KPI parameters as an input, and may provide an output value corresponding thereto, which will be described later. An output from the RL agent may be an operation (or an action or an RAN policy) of at least one entity of the RAN 150, and the at least one entity of the RAN 150 may operate based on received information.

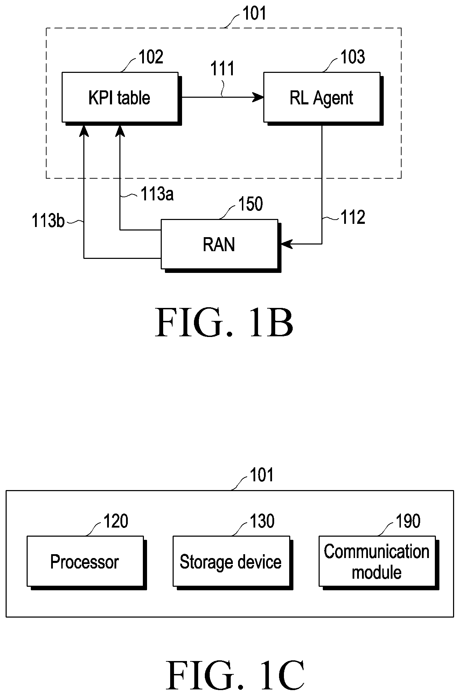

FIG. 1B is a block diagram illustrating an example configuration of an RIC according to various embodiments.

According to various embodiments, at least one of a KPI table 102 or an RL agent 103 may be defined (or stored) in the RIC 101. The RIC 101 may refer to the KPI table 102 and/or may execute the RL agent 103, and the KPI table 102 and/or RL agent 103 may not be necessarily stored in the RIC 101.

According to various embodiments, the KPI table may include information associated with an operation (or action) and a parameter associated with an RAN for each of a plurality of points in time. A parameter may be referred to as, for example, performance information. For example, an action may be referred to as configuration information. Table 1 is an example of a KPI table.

**[Table 1]**

| Point in time | First parameter | Second parameter | Third parameter | Action |
|---|---|---|---|---|
| First point in time | 1.2 | 230 | 0.2 | Config# 1 |
| Second point in time | 1.3 | 242 | 0.19 | Config#1 |
| Third point in time | 1.4 | 236 | 0.18 | Config#2 |
| Fourth point in time | 1.5 | 209 | 0.17 | Config#2 |
| Fifth point in time | 1.6 | 220 | 0.16 | Config#1 |

In Table 1, parameters (a first parameter, a second parameter, a third parameter) may be, for example, parameters for indicating the state (or environment) of an RAN. For example, the parameters included in the KPI table may include at least one among a packet data rate, cell traffic, information associated with a UL signal reception strength (at least one of a reference signals received power (RSRP), a reference signal received quality (RSRQ), or a reference signal strength indicator (RSSI)), a channel quality indicator (CQI), channel state information (CSI), the number of connected UEs, a PDCP throughput, PRB usage, UE mobility statics, physical resource block (PRB) utilization, control channel elements (CCE) utilization, or a PDCP buffer state, a downlink latency, or the number of PDU sessions, and if it is information indicating the state (or environment) of an RAN, there is no limitation. Action may be an operation that at least one entity included in an RAN needs to perform. For example, the action may include at least one piece of information among information associated with UE scheduling (e.g., UE scheduling priority), bearer reselection decision, UE mobility (e.g., a handover), a carrier aggregation (CA) associated information, or dual connectivity (DC) related information, and if it is an operation that an entity included in an RAN is capable of performing, there is no limitation. Table 1 shows an example in which a parameter and an action are separately managed. However, this is merely an example, a KPI table may manage a parameter and an action without distinguishing from each other, but may manage both as state factors. The form of the KPI table is not limited. In addition, the number of parameters (3 parameters) and the number of actions (one action) in Table 1 are merely an example, and the number of parameters is not limited. According to various embodiments, the RL agent 103 may obtain, as an input value, a parameter 111 (e.g., at least some of the first, second, third parameters of Table 1) indicating the state (or environment) of an RAN at a predetermined (e.g., specified) point in time, by referring to the KPI table 102. At least a part of the KPI table 102 may be updated based on, for example, existing information 113a associated with the state of an RAN obtained from the RIC 101. For example, referring to the example of Table 1, the electronic device 101 may obtain a first parameter of" 1.2", a second parameter of "230", and a third parameter of "0.2", as the information 113a associated with the state of the RAN at a first point in time. Accordingly, the RIC 101 may update the first parameter, the second parameter, and the third parameter at the first point in time in the KPI table 102, respectively with "1.2", "230", and "0.2".

For example, the RL agent 103 may be for the assurance of service level agreements, and may output a UE scheduling priority as an action. The RL agent 103 may be for an SLS DU actor action, and may output a UE scheduling priority as an action. The RL agent 103 may be for a traffic steering DU actor action, and may output bearer reselection determination (or a division ratio for each RAT (e.g., E-UTRA:NR is 0.6:0.4) as an action. The RL agent 103 may be applied to only a single cell, or may be applied to a plurality of cells.

According to various embodiments, the RL agent 103 may include (or execute) at least one model produced via reinforcement learning. The RL agent 103 may process the parameter 111 indicating the state of an RAN at a predetermined point in time at which it is obtained as an input value, and may output an action 112. For example, the RL agent 103 may obtain, as an input value, "1.2", "230", and "0.2" which are the respective values of the first parameter, the second parameter, and the third parameter that are predetermined parameters corresponding to the RL agent 103 at a first point in time. A model included in (or executed in) the RL agent 103 may process an input value, and may provide the action 112 which is an output value. For example, the action 112 may be "Config#1", and may be updated at a second point in time in the KPI table 102. The action 112 may be transferred to the RAN 150, and at least one entity included in the RAN 150 may operate according to the action 112 received at the second point in time. After an operation is performed according to the action 112, the state of the RAN 150 may be changed. The RIC 101 may obtain information 113b associated with the changed state of the RAN 150, and may update the KPI table for a next point in time. For example, referring to the example of Table 1, the electronic device 101 may obtain a first parameter of" 1.3", a second parameter of "242", and a third parameter of "0.19", as the information 113b associated with the state of the RAN at the second point in time. Accordingly, the RIC 101 may update the first parameter, the second parameter, and the third parameter at the second point in time in the KPI table 102, respectively with "1.3", "242", and "0.19". At least some of the parameter values at the second point in time may be used by the RL agent 103, an action (e.g., Config #1) may be provided to the RAN 150, and the entity of the RAN 150 may operate according to the corresponding action. Alternatively, the RIC 101 may be configured to receive values of "1.3", "242", and "0.19" respectively corresponding to the first parameter, the second parameter, and the third parameter at the second point in time from the RAN 150, and may receive an action of "Config#1" from the RAN 150. By repeating the above-described processes, the KPI table 102 may be updated in a time series manner (e.g., the order of a first point in time, a second point in time, a third point in time, a fourth point in time, and a fifth point in time). The RL agent 103 (or a model included in or executed in the RL agent 103) may be updated, which will be described later.

FIG. 1C is a block diagram illustrating an example hardware configuration of an RIC according to various embodiments.

According to various embodiments, the RIC 101 (or an electronic device configured to perform the function of the RIC 101) may include at least one among the processor (e.g., including processing circuitry) 120, the storage device 130, and/or the communication module (e.g., including communication circuitry) 190.

According to various embodiments, the processor 120 may include various processing circuitry and control at least one other element (e.g., hardware or software element) of the RIC 101 (or an electronic device configured to perform the function of the RIC 101) connected to the processor 120 by operating, for example, software (e.g., a program), and may perform various data processing and operations. Software may include at least some among, for example, the RL agent 103 (or a program of executing or accessing the RL agent 103) and the experience data producer 109 (or a program of executing or accessing the experience data producer 109), (or if an RL learner 107 is included in the RIC 101), the RL learner 107 (or a program of executing or accessing the RL learner 107), but it is not limited thereto. According to an embodiment, as at least a part of data processing or operation performing, the processor 120 may store a command or data received from another element in the storage device 130, may process the command or data stored in the storage device 130, and may store resultant data in the storage device 130. According to an embodiment, the processor 120 may include at least some among a central processing unit, an application processor, a neural processing unit (NPU), or a communication processor, but the type of processor 120 is not limited. A neural network processing device may include a hardware structure specialized for processing an artificial intelligence model. An artificial intelligence model (e.g., the RL agent 103) (or a model included in or executed in the RL agent 103) may include machine learning (e.g., reinforcement learning, supervised learning, unsupervised learning, or semi-supervised learning), but it is not limited thereto. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-networks, or a combination of at least two of them, but may not be limited thereto. The artificial intelligence model may additionally or alternatively include a software structure, in addition to a hardware structure. If the storage device 130 is a device for storing data, such as a disc (e.g., HDD), those skilled in the art would understand that there is no limitation. According to various embodiments, the operation of at least one of the RL agent 103, the RL learner 107, or the experience data producer 109 may be understood as an operation by the processor 120, or an operation by another piece of hardware (e.g., at least one of the storage device 130 or the communication module 190) controlled by the processor 120. An instruction for operating at least one of the RL agent 103, the RL learner 107, or the experience data producer 109 may be stored in the storage device 130.

According to various embodiments, the storage device 130 may store various data used by at least one element (e.g., the processor 120 or the communication module 190) of the RIC 101 (or an electronic device configured to perform a function of the RIC 101). Data may include, for example, software, and input data or output data associated with a command related to the software. The storage device 130 may store the above-described KPI table 101.

According to various embodiments, the communication module 190 may include various communication circuitry and establish a direct (e.g., wired) communication channel or a wireless communication channel between the RIC 101 (or an electronic device configured to perform the function of the RIC 101) and an external electronic device (e.g., an E2 node), and may support communication via the established communication channel. If the communication module 190 is capable of supporting, for example, an E2 interface, the type of the communication module 190 is not limited. If the RIC 101 and the RAN 150 are embodied as a single device, the communication module 190 may be an interface for both entities. If the RL learner 107 is embodied outside the RIC 101, the RIC 101 may perform data transmission and/or reception with the RL learner 107 via the communication module 190, which will be described later.

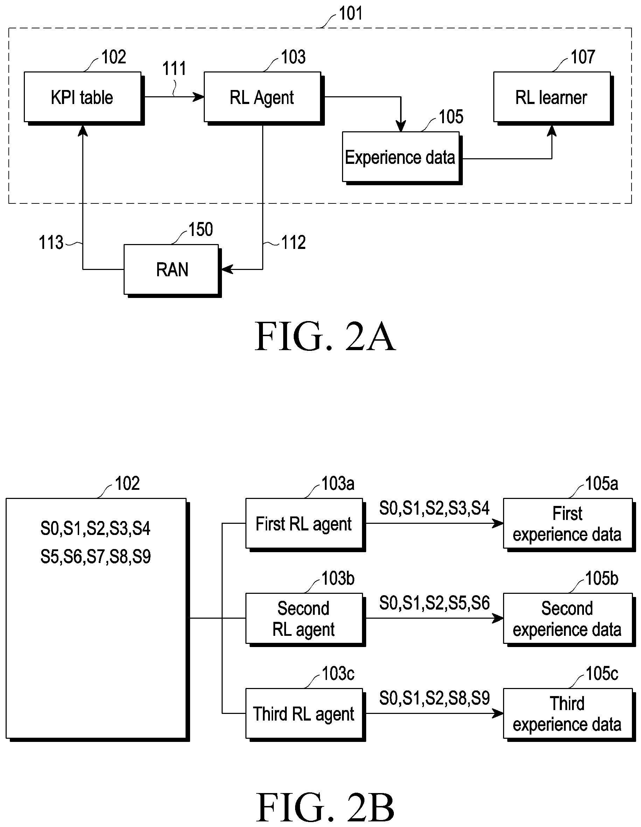

FIG. 2A is a block diagram illustrating an example configuration of an RIC according to a comparative example for comparison with various embodiments. At least some of the operations performed by the RIC 101 according to the comparative example may be performed according to various embodiments.

The RL agent 103 of the RIC 101 may produce experience data 105. Table 2 is an example of the experience data 105.

**[Table 2]**

| Experience data | State before performing action | Action | State after performing action | Reward |
|---|---|---|---|---|
| 1 | {1.2, 230, 0.2} | Config#1 | {1.3, 242, 0.19} | 1.3 * 0.19 |
| 2 | {1.3, 242, 0.19} | Config#2 | {1.4, 236, 0.18} | 1.4 * 0.18 |
| 3 | {1.4, 236, 0.18} | Config#2 | {1.5, 209, 0.17} | 1.5 * 0.17 |
| 4 | {1.5, 209, 0.17} | Config#1 | {1.6, 220, 0.16} | 1.6 * 0.16 |

According to the reinforcement learning, obtaining state information, determining a corresponding action, obtaining subsequent state information as a result of performing the action, and obtaining a reward may be repeated, reinforcement learning may be performed to maximize reward. Accordingly, the experience data 105 for reinforcement learning may include information associated with "state before performing action", "action", "state after performing action", and "reward". For example, in Table 2, the state before performing action of {1.2, 230, 0.2} in the experience data of "1" may be the values of a first parameter, a second parameter, and a third parameter, respectively, at a first point in time in Table 1. Based thereon, Config# 1 which is an action (e.g., an action in a second point in time in Table 1) determined by the RL agent 103 may be included as an action in the experience data of "1". The state after performing action of {1.3, 242, 0.19} in the experience data of 1" may be the values of the first parameter, the second parameter, and the third parameter, respectively, at the second point in time in Table 1. A reward may be determined by, for example, the product of the value of the first parameter and the value of the third parameter at the second point in time, and a method of determining a reward is not limited and may be changeable. Although not illustrated, reinforcement learning may use a penalty factor as well as a reward, and those skilled in the art will understand that the corresponding factor may be further included in the experience data 105. As described above, the RL agent 103 may update time series data (e.g., "1","2","3", and "4" in Table 2) of the experience data 105 (or experience table) as time series data in the KPI table 102 is updated. The RL learner 107 may update (or produce) the RL agent 103 (or a model included in or executed in the RL agent) using information associated with the experience data 105. The RL agent 103 updated (or produced) by the RL learner 107 may be a model capable of maximizing a reward value more than before, or may include (or execute) the model.

According to a comparative example, a table for storing the experience data 105 needs to be defined in the storage device 130 at all times, and thus, it may be burden to resources. In addition, the experience data 105 is produced based on an input value and an output value of the RL agent 103, and parameters included in the experience data 105 may be subordinate to the RL agent 103 and are not changeable. Furthermore, if the plurality of RL agents produce experience data, respectively, the same value may be duplicated and thus, this may be burden to the resources of the experience data 105, which will be described with reference to FIG. 2B.

FIG. 2B is a block diagram illustrating example production of experience data by a plurality of RL agents according to a comparative example for comparison with various embodiments. At least some of the operations performed by the RIC 101 according to the comparative example may be performed according to various embodiments.

Referring to FIG. 2B, the RIC 101 may produce the KPI table 102 associated with a plurality of states S0, S1, S2, S3, S4, S5, S6, S7, S8, and S9, and may update them in a time series manner. In Table 1, a KPI table including 4 states based on first to third parameters and an action has been described. Referring to the example of FIG. 2B, the KPI table 102 associated with 10 states S0, S1, S2, S3, S4, S5, S6, S7, S8, and S9 may be produced and/or managed. At least some of the ten states S0, S1, S2, S3, S4, S5, S6, S7, S8, and S9 may be parameters for indicating the states of the RAN 150, and at least some of the remaining may be actions performed by at least one entity of the RAN 150, but the disclosure is not limited thereto. For example, the first RL agent 103a may obtain at least some of the S0, S1, S2, S3, and S4 states as an input value, and may provide at least some actions of the remaining as an output value. For example, the second RL agent 103b may obtain at least some of the S0, S1, S2, S5, and S6 states as an input value, and may provide at least some actions of the remaining as an output value. For example, the third RL agent 103c may obtain at least some of the S0, S1, S2, S8, and S9 states as an input value, and may provide at least some actions of the remaining as an output value. Information associated with input values and output values of a plurality of RL agents 103a, 103b, and 103c is included in the KPI table 102, and thus, the KPI table 102 may include values associated with 10 S0, S1, S2, S3, S4, S5, S6, S7, S8, and S9 states.

The first RL agent 103a may produce a first experience data 105a associated with S0, S1, S2, S3, and S4 states, the second RL agent 103b may produce second experience data 105b associated with S0, S1, S2, S5, and S6 states, and the third RL agent 103c may produce third experience data 105c associated with S0, S1, S2, S8, and S9 states. The form of the experience data 105a, 105b, and 105c may be, for example, similar to those listed in Table 2. For example, it is assumed that S1 is an action, and the remaining S0, S2, S3, S4, S5, S6, S7, S8, and S9 are parameters. In this instance, the examples of the first experience data 105a to third experience data 105c may be as shown in Table 3.

**[Table 3]**

| Experience data | State before performing action | Action | State after performing action | Reward |
|---|---|---|---|---|
| First experience data 105a | {SO(t1),S2(t1), S3(t1),S4(t1)} | S1(t2) | {S0(t2),S2(t2), S3(t2),S4(t2)} | S0(t2) * S3(t2) |
| Second experience data 105b | {SO(t1),S2(t1), S5(t1),S6(t1)} | S1(t2) | {S0(t2),S2(t2), S5(t2),S6(t2)} | S0(t2) * S5(t2) |
| Third experience data 105c | {SO(t1),S2(t1), S8(t1),S9(t1)} | S1(t2) | {S0(t2),S2(t2), S8(t2),S9(t2)} | S0(t2) * S8(t2) |

In Table 3, actions of the RL agents 103a, 103b, and 103c are all "S1" state, but this is merely an example, and the actions of the RL agents 103a, 103b, and 103c may be different from each other. For example, S0(t1) may denote the value of parameter S0 at t1, and S0(t2) may denote the value of parameter S0 at t2, and others may be understood in this manner. For example, as shown in Table 3, it is identified that duplicate values of S0, S 1, and S2 states which the RL agents use in common are present in the KPI table. Accordingly, there may be a waste of resources.

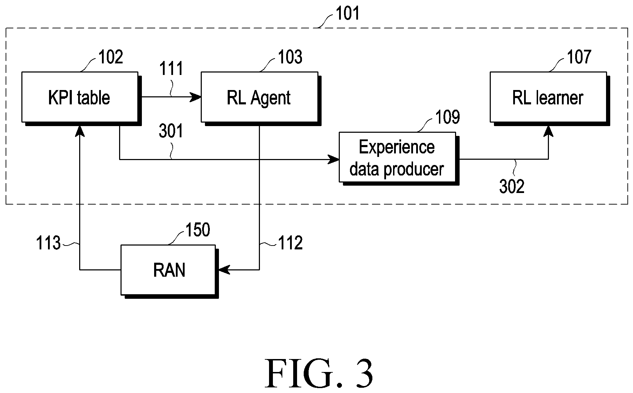

FIG. 3 is a block diagram illustrating an example configuration of an RIC according to various embodiments.

According to various embodiments, the RIC 101 may further include an experience data producer (e.g., including various processing circuitry and/or executable program instructions) 109 (or may perform the function of the experience data producer 109) when compared to FIG. 2A. The fact that the RIC 101 includes the experience data producer 109 may describe, for example, that the function of the experience data producer 109 is executed by the processor 120 of an electronic device including the RIC 101 (or an electronic device that provides the function of the RIC 101), or may describe that at least one instruction for executing the function of the experience data producer 109 is stored in the storage device 130.

According to various embodiments, the experience data producer 109 may obtain data 301 from the KPI table 102. The experience data producer 109 may produce experience data 302 using the obtained data 301, and may provide the same to the RL learner 109. The RL learner 109 may update the RL agent 103 or may produce a new RL agent using the experience data 302. The updated or newly produced RL agent 103 may replace the existing RL agent.

According to various embodiments, the experience data producer 109 may obtain the data 301 and produce the experience data 302 in response to a request for producing experience data from the RL learner 107 (or another entity). The experience data 302 may be at least temporarily produced in the RIC 101 in response to the request for producing experience data, and may be deleted after being provided to the RL learner 107. Accordingly, when compared to the comparative example of FIG. 2A in which experience data produced by the RL agent 103 is stored all the time, the RIC 101 according to various embodiments may use relatively a small amount of resources to produce experience data. In addition, a parameter and/or an action included in the experience data 302 may be adjustable. According to the comparative example of FIG. 2A, experience data may be produced based on a parameter and an action used by the RL agent 103, the parameter and/or action in the experience data is not adjustable. According to the disclosure, the experience data 302 may be produced based on a parameter and an action declared by the RL agent 103, or may be produced based on a parameter and an action selected by a user. In addition, a method of determining a reward included in the experience data 302 may be adjustable.

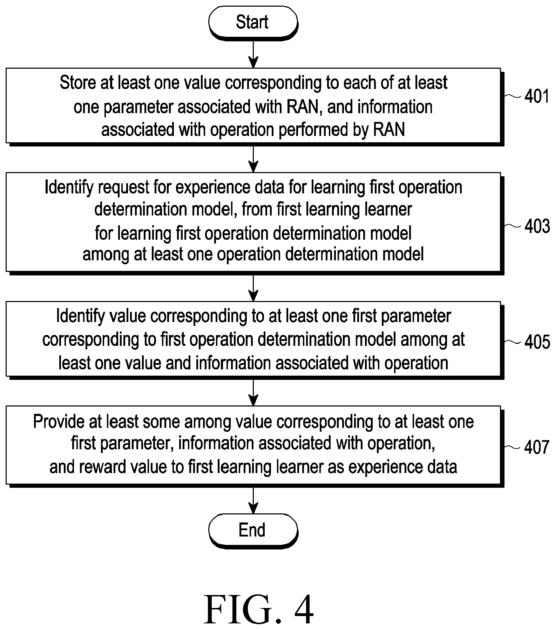

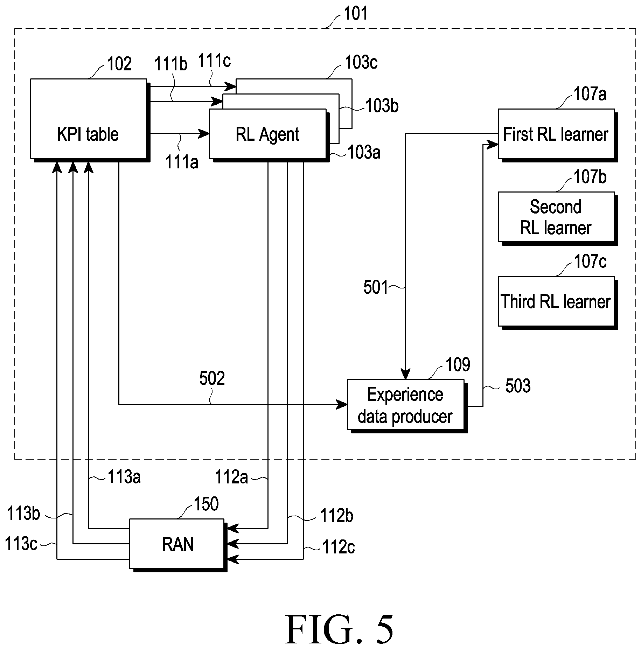

FIG. 4 is a flowchart illustrating an example method of operating an electronic device according to various embodiments. The embodiments of FIG. 4 will be described with reference to FIG. 5. FIG. 5 is a block diagram illustrating an example configuration of an RIC according to various embodiments.

According to various embodiments, in operation 401, the RIC 101 may store at least one value corresponding to each of at least one parameter associated with an RAN, and information associated with an operation performed by the RAN. The RIC 101 may store at least one value corresponding to each of at least one parameter associated with an RAN, and information associated with an operation performed by the RAN, for each of a plurality of points in time. Referring to FIG. 5, the RIC 101 may store the KPI table 102 as shown in Table 1. As described with reference to Table 1, the RIC 101 may store at least one value (e.g., "1.2", "230", and "0.2" at the first point in time in Table 1) corresponding to at least one parameter (e.g., the first parameter to third parameter in Table 1) for each of a plurality of points in time (e.g. the first point in time to the fifth point in time in Table 1), and information (e.g., "Config#1" at the first point in time in Table 1) associated with an operation (e.g., an action in Table 1) performed by the RAN. The RIC 101 may store value associated with a single RL agent and value associated with a plurality of RL agents. For example, as described with reference to FIG. 2B, the KPI table 102 based on a plurality of states (e.g., S0 to S9) may be stored by the RIC 101. Referring to FIG. 5, the plurality of RL agents 103a, 103b, and 103c stored in (or executed in) the RIC 101 may obtain a value 111a, 111b, and 111c corresponding to at least one parameter from the KPI table 102, and may provide information (e.g., action) 112a, 112b, and 112c associated with an operation corresponding thereto. The information 112a, 112b, and 112c associated with the operation may be provided to the RAN 150. At least one entity of the RAN 150 may operate based on the information 112a, 112b, and 112c associated with the operation. As an operation is performed, the state of the RAN 150 may be changed. The information 113a, 113b, and 113c associated with the state of the RAN 150 may be provided to the RIC 101. The RIC 101 may update the KPI table 102 using the information 113a, 113b, and 113c associated with the state of the RAN 150. For example, the RIC 101 may write, based on the information 113a, 113b, and 113c associated with the state of the RAN 150, a value corresponding to each of at least one parameter for a next point in time in the KPI table 102.

According to various embodiments, in operation 403, the RIC 101 may identify a request for experience data for learning a first operation determination model, from a first learning learner (e.g., the RL learner 107a of FIG. 5) for learning the first operation determination model among at least one operation determination model (e.g., the RL agents 103a, 103b, and 103c of FIG. 5). For example, referring to FIG. 5, the RIC 101 may include RL learners 107a, 107b, and 107c for learning the RL agents 103a, 103b, and 103c (or models included in the RL agents 103a, 103b, and 103c). As described above, according to another embodiment, the RL learners 107a, 107b, and 107c may be executed in an entity different from the RIC 101. In this instance, the RL learners 107a, 107b, and 107c may not be included in (or may not be executed in) the RIC 101. The first learner 107a may be a learning learner for learning the first RL agent 103a. As illustrated in FIG. 5, the experience data producer 109 may obtain a request 501 for experience data from the first RL learner 107a.

According to various embodiments, in operation 405, the RIC 101 may identify a value corresponding to at least one first parameter corresponding to the first operation determination model (e.g., the first RL agent 103a) among the at least one value (e.g., the values included in the KPI table 102), and information associated with an operation. As an example, the RIC 101 may identify a value corresponding to at least one first parameter declared in advance by the first RL agent 103, and information associated with an operation. For example, the RIC 101 may store the correspondence relationship between the first RL learner 107a and the first RL agent 103a in advance, or may identify, based on the identification information of the first RL agent 103a included in the request 501, a value corresponding to at least one first parameter declared in advance and information associated with an operation. As another example, based on an external input (e.g., an input by a user), the RIC 101 may identify a value corresponding to the at least one first parameter and information associated with an operation. The RIC 101 may be configured so as to configure a parameter and/or action for producing experience data. Based on a parameter and/or action configured according to an external input, the RIC 101 may identify a value corresponding to at least one first parameter and information associated with an operation for producing experience data.

According to various embodiments, in operation 407, the RIC 101 may provide the value corresponding to the at least one first parameter and information associated with an operation, and a reward value identified based on at least a part of the value corresponding to the at least one first parameter to the first learning learner as the experience data 503. The experience data producer 109 may produce the experience data 503 based on the value corresponding to the at least one first parameter and the information associated with the operation identified in operation 405. For example, the experience data producer 109 may produce the experience data 503 provided in the form of Table 2. Based on the KPI table 102 produced based on values associated with the plurality of RL agents 103a, 103b, and 103c, the experience data producer 109 may obtain values corresponding to at least one first parameter (e.g., the first parameter, the second parameter, and the third parameter in Table 1) and values of information associated with an operation (e.g., an action in Table 1). The experience data producer 109 may produce, as the experience data 503, information associated with each of the state before performing an action, an action, the state after performing an action, and a reward as shown in Table 2. The experience data producer 109 may produce the experience data 503, and may at least temporarily store the same. That may be provided to the first RL learner 107a. For example, the experience data producer 109 may provide the experience data 503 to the first RL learner 107a, and may delete the experience data 503 that has been stored.

As described above, unlike the comparative example, the RIC 101 may not store and manage the experience data 503 all times, but the RIC 101 may produce and provide the experience data 503 by request from a learning leaner, and thus, a waste of resources of the RIC 101 may be prevented and/or reduced. In addition, the RIC 101 may decrease a probability of data duplication, unlike the comparative example in which experience data is produced by each of the plurality of RL agents 103a, 103b, and 103c. Furthermore, user settings associated with a parameter and an action of experience data may be available. Experience data may be flexibly produced in association with learning of an existing RL agent and learning of an updated RL agent.

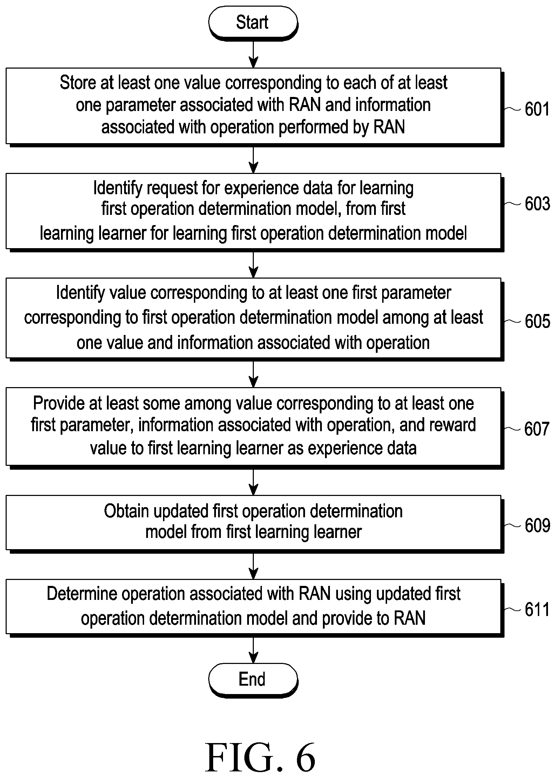

FIG. 6 is a flowchart illustrating an example method of operating an electronic device according to various embodiments.

According to various embodiments, in operation 601, the RIC 101 may store at least one value corresponding to each of at least one parameter associated with the RAN 105, and information associated with an operation performed by the RAN 105. For example, the RIC 101 may store the KPI table 102. In operation 603, the RIC 101 may identify a request for experience data for learning a first operation determination model, from a first learning learner (e.g., a first RL leaner) for learning the first operation determination model (e.g., the first RL agent (or a model included in or executed in the first RL agent)). In operation 605, the RIC 101 may identify a value corresponding to at least one first parameter corresponding to the first operation determination model among the at least one value, and information associated with an operation. For example, the RIC 101 may identify the values of parameters corresponding to the first operation determination model in the KPI table 102, and information associated with an operation (e.g., an action). In operation 607, the RIC 101 may provide the value corresponding to the at least one first parameter, the information associated the operation, and a reward value identified based on the value corresponding to the at least one first parameter to the first learning learner as the experience data. The RIC 101 may produce experience data, for example, in the form of Table 2. The RIC 101 may obtain values corresponding to the at least one first parameter and values of information associated with an operation from the KPI table 102. The RIC 101 may produce information associated with each of the state before performing an action, an action, the state after performing an action, and a reward, as experience data, as shown in Table 2, and may provide the produced experience data to the first learning learner.

According to various embodiments, the RIC 101 may obtain an updated first operation determination model from the first learning learner in operation 609. For example, an RL learner may update the first operation determination model using the provided experience data. Those skilled in the art will understand that an RL learner's learning method for updating a model (or for producing a new model) is not limited. In operation 611, the RIC 101 may determine an operation associated with the RAN using the updated first operation determination model, and may provide the same to the RAN. The RIC 101 may provide at least one parameter associated with the state of the RAN to the updated first operation determination model. The updated first operation determination model may be configured to obtain, as an input value, a parameter which is the same as or similar to a parameter used before updating. However, depending on implementation, the updated first operation determination model may be configured to obtain, as an input value, a parameter different from a parameter used before updating.

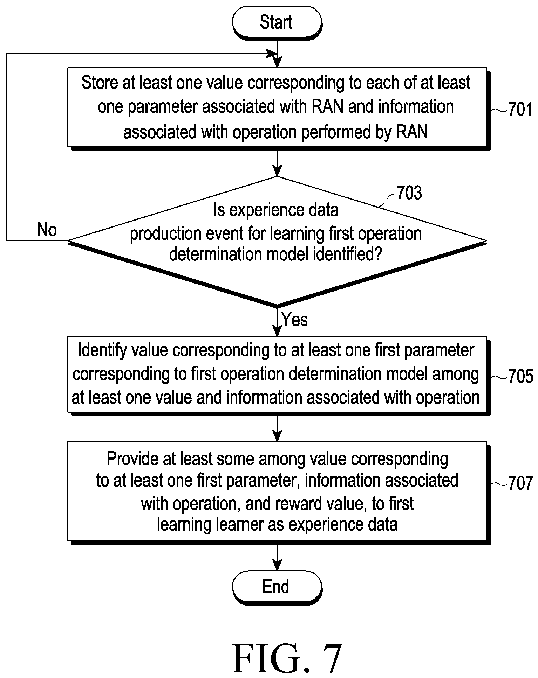

FIG. 7 is a flowchart illustrating an example method of operating an electronic device according to various embodiments.

According to various embodiments, in operation 701, the RIC 101 may store at least one value corresponding to each of at least one parameter associated with an RAN, and information associated with an operation performed by the RAN. For example, the RIC 101 may store the KPI table 102. In operation 703, the RIC 101 may determine whether an experience data production event for learning the first operation determination model is identified. For example, the RIC 101 may identify a request from a first learning learner as described above, as an experience data production event. For example, if it is identified that a reward satisfies a condition for a designated updating, the RIC 101 may identify that an experience data production event occurs. According to a change in a wireless environment, there is the probability that a reward associated with the action of the first operation determination model may be decreased. For example, if a reward having a value less than or equal to a designated value is detected (or the number of times that a value less than or equal to a designated value is detected is greater than or equal to a predetermined threshold number of times, or a period in which a value less than or equal to a designated value continues is greater than or equal to a designated threshold period), the RIC 101 may produce and provide experience data to the learning learner. In this instance, the RIC 101 may request learning from a learning leaner. For example, the RIC 101 may evaluate the quality of the RAN 150, in addition to performing reward for experience data. If it is determined that the result of the evaluation of the quality is poor, the RIC 101 may produce experience data and provide the same to the learning learner. For example, if a designated period (e.g., one week) elapses from the last updating point, it is identified that an experience data production event occurs. The type of an event for producing experience data is not limited. In addition, those skilled in the art would understand that a request from a learning learner according to various embodiments of the disclosure may be replaced with an experience data production event according to the above-described embodiment and other embodiments. Based on the detection of the event (Yes in 703), in operation 705, the RIC 101 may identify a value corresponding to at least one first parameter corresponding to the first operation determination model among the at least one value, and information associated with an operation. In operation 707, the RIC 101 may provide the value corresponding to the at least one first parameter, the information associated with the operation, and a reward value identified based on the value corresponding to the at least one first parameter to the first learning learner as the experience data.

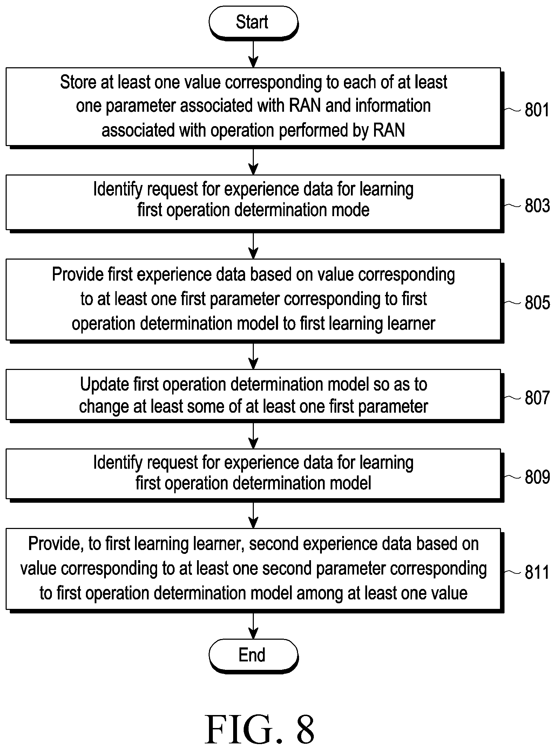

FIG. 8 is a flowchart illustrating an example method of operating an electronic device according to various embodiments.

According to various embodiments, in operation 801, the RIC 101 may store at least one value corresponding to each of at least one parameter associated with the RAN 150, and information associated with an operation performed by the RAN 150. For example, the RIC 101 may store the KPI table 102. In operation 803, the RIC 101 may identify a request for experience data for learning a first operation determination model. In operation 805, the RIC 101 may provide, to a first learning learner, first experience data based on a value corresponding to at least one first parameter corresponding to the first operation determination model. For example, the RIC 101 may produce, as the first experience data, information associated with each of the state before performing an action, an action, the state after performing an action, and a reward as shown in Table 2. The state before performing an action and the state after performing an action in the first experience data may include a value corresponding to the at least one first parameter.

According to various embodiments, the RIC 101 may update the first operation determination model to change at least some of the at least one first parameter in operation 807. As described above, the first operation determination model may be updated to use a parameter different from a parameter used before updating. Alternatively, a learning learner may change the existing first operation determination model to a new first operation determination model. In this instance, at at least one point in time among the point in time of downloading the first operation determination model, the point in time of starting updating, the point in time of proceeding with updating, or the point in time of completion of updating, a parameter that the first operation determination model uses may be declared and the RIC 101 may identify the declared parameter. If a new operation determination model is obtained, at at least one point in time among the point in time of downloading the new operation determination model, the point in time of starting installation, the point in time of proceeding with installation, or the point in time of completion of installation, a parameter that the new operation determination model uses may be declared and the RIC 101 may identify the declared parameter. The RIC 101 may input a newly defined parameter in the KPI table 102 to the first operation determination model. In addition, when the first learning learner requests production of experience data for learning the first operation determination model, experience data may be produced using a newly defined parameter and action. In operation 809, the RIC 101 may identify a request for experience data for learning the first operation determination model. In operation 811, the RIC 101 may provide, to the first learning learner, second experience data based on a value corresponding to at least one second parameter corresponding to the first operation determination model among the at least one value. For example, the RIC 101 may produce, as second experience data, information associated with each of the state before performing an action, an action, the state after performing an action, and a reward as shown in Table 2. The state before performing an action and the state after performing an action in the second experience data may include a value corresponding to the at least one second parameter.

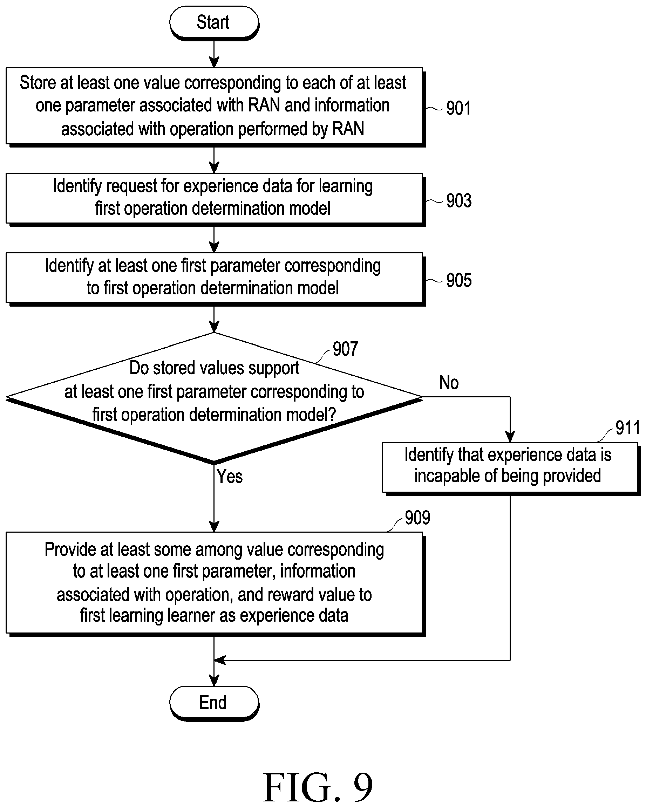

FIG. 9 is a flowchart illustrating an example method of operating an electronic device according to various embodiments.

According to various embodiments, the RIC 101 may store at least one value corresponding to each of at least one parameter associated with the RAN 150, and information associated with an operation performed by the RAN in operation 901. For example, the RIC 101 may store the KPI table 102. In operation 903, the RIC 101 may identify a request for experience data for learning a first operation determination model. In operation 905, the RIC 101 may identify at least one first parameter corresponding to the first operation determination model. The method in which the RIC 101 identifies the at least one first parameter corresponding to the first operation determination model has been described, and thus, the detailed description thereof may not be repeated.

According to various embodiments, in operation 907, the RIC 101 may determine whether the stored values support the at least one first parameter corresponding to the first operation determination model. The RIC 101 may determine whether the at least one first parameter is supported in the KPI table 102. If the stored values support the at least one first parameter (Yes in operation 907), in operation 909, the RIC 101 may provide a value corresponding to the at least one first parameter, information associated with an operation, and a reward value identified based on the value corresponding to the at least one first parameter, to the first learning learner as experience data. If the stored values do not support at least some of the at least one first parameter (No in operation 907), the RIC 101 may identify that experience data is incapable of being provided in operation 911. The RIC 101 may output a message indicating that experience data is incapable of being provided. For example, it is assumed that the KPI table 102 such as Table 1 is stored. The RIC 101 may identify that a parameter for producing experience data is a first parameter and a second parameter. In this instance, the RIC 101 may produce experience data based on the first parameter and the second parameter. The RIC 101 may identify that a parameter for producing experience data is a first parameter and a fourth parameter. In this instance, the RIC 101 may identify that the fourth parameter is not supported in the KPI table 102, and experience data is incapable of being produced.

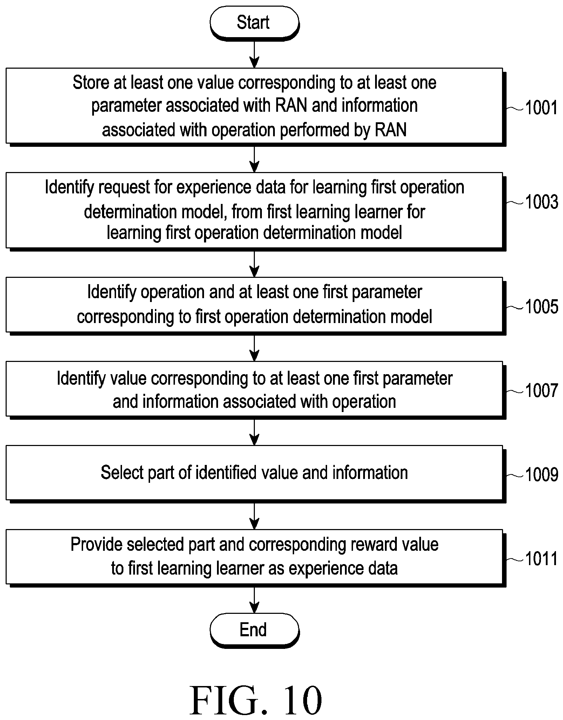

FIG. 10 is a flowchart illustrating an example method of operating an electronic device according to various embodiments.

According to various embodiments, the RIC 101 may store at least one value corresponding to each of at least one parameter associated with the RAN 150, and information associated with an operation performed by the RAN in operation 1001. For example, the RIC 101 may store the KPI table 102. In operation 1003, the RIC 101 may identify a request for experience data for learning a first operation determination model. In operation 1005, the RIC 101 may identify an operation and at least one first parameter corresponding to the first operation determination model. In operation 1007, the RIC 101 may identify a value corresponding to the at least one first parameter and information associated with the operation. For example, the RIC 101 may identify (or read) the entirety of a value corresponding to the at least one first parameter and the entirety of information associated with the operation among the values stored in the KPI table 102.

According to various embodiments, the RIC 101 may select some of the identified values and information in operation 1009. In operation 1011, the RIC 101 may provide the selected some values and information and a corresponding reward value as experience data to the first learning learner. The RIC 101 may not provide, to the first learning learner, experience data based on all the information obtained from the KPI table 102, but may provide experience data based on some of the obtained information to the first learning learner. As an example, the RIC 101 may select some of the obtained information according to priority. It is assumed that information such as table 4 is identified (or read) as information corresponding to the first operation determination model.

**[Table 4]**

| point in time | First parameter | Second parameter | Third parameter | Action |
|---|---|---|---|---|
| first point in time | 1.2 | 230 | 0.2 | Config#1 |
| second point in time | 1.3 | 242 | 0.19 | Config#1 |
| third point in time | 1.4 | 236 | 0.18 | Config#2 |
| fourth point in time | 1.5 | 209 | 0.17 | Config#2 |
| fifth point in time | 1.6 | 220 | 0.16 | Config# 1 |
| sixth point in time | 1.3 | 209 | 0.17 | Config#2 |
| seventh point in time | 1.4 | 220 | 0.14 | Config#2 |
| eighth point in time | 1.2 | 211 | 0.17 | Config#2 |
| ninth point in time | 1.6 | 217 | 0.15 | Config#1 |
| tenth point in time | 1.4 | 233 | 0.15 | Config#1 |

For example, if a second parameter has the highest priority, the RIC 101 may select values corresponding to the second parameter in descending order up to a predetermined number (or a predetermined ratio). If it is the case of determining 40% of the all values corresponding to the second parameter according to priority, the RIC 101 may select information associated with "a second point in time", "a third point in time", "a tenth point in time", and "a first point in time" among the values corresponding to the second parameter in descending order. The RIC 101 may produce experience data based on the selected information. In order to produce experience data, a parameter before performing an action and a parameter after performing an action may be required. The RIC 101 may produce experience data further using information associated with a point in time before or after the information associated with the "second point in time", "the third point in time", "the tenth point in time", and "the first point in time". The process of performing selection according to priority is merely an example, the priority order for parameters is not limited, and if some of all data are selected in predetermined priority order, a selecting method is not limited. As an example, the RIC 101 may randomly select some of the obtained information. A selection ratio (or a predetermined number) may be determined in advance. The RIC 101 may perform random extraction until the number of pieces of data corresponding to a previously selected ratio or the predetermined number of pieces of data is satisfied. As an example, the RIC 101 may sequentially extract some of the obtained information. For example, the RIC 101 may select a predetermined number of pieces of data from the point in time at which the KPI table 102 is updated. Alternatively, the RIC 101 may select a predetermined number of pieces of data from the latest point in time, and a sequential extracting method is not limited. The above-described various extraction methods are merely examples, and those skilled in the art would understand that there is no limitation if an extraction method is a method of selecting some of all data.

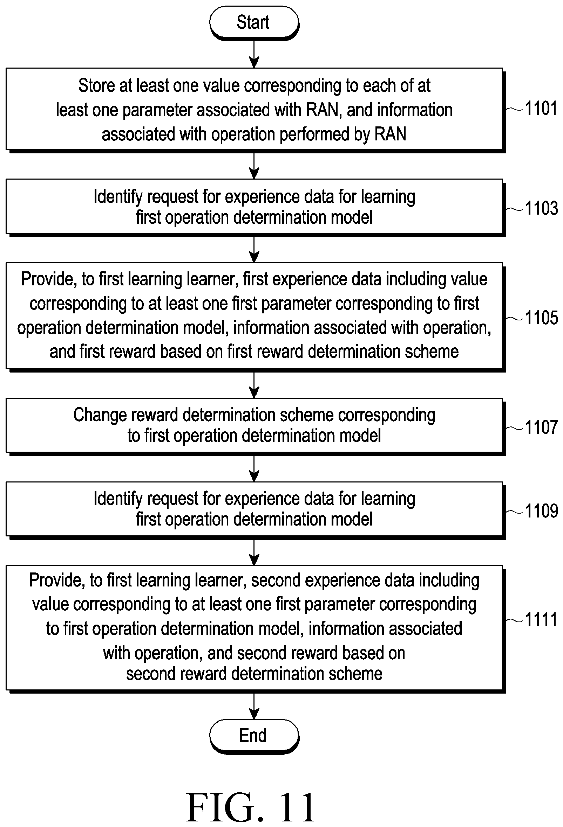

FIG. 11 is a flowchart illustrating an example method of operating an electronic device according to various embodiments.

According to various embodiments, the RIC 101 may store at least one value corresponding to each of at least one parameter associated with the RAN 150, and information associated with an operation performed by the RAN 150 in operation 1101. For example, the RIC 101 may store the KPI table 102. In operation 1103, the RIC 101 may identify a request for experience data for learning a first operation determination model. In operation 1105, the RIC 101 may provide, to a first learning learner, first experience data including a value corresponding to at least one first parameter corresponding to the first operation determination model, information associated with an operation, and a first reward based on a first reward determination scheme. For example, it is assumed that the KPI table 102 is Table 1. In addition, the first reward determination scheme may be the product of a value corresponding to a first parameter and a value corresponding to a third parameter. In this instance, the RIC 101 may produce first experience data including, for example, the state before performing an action, an action, the state after performing an action, and a reward identified according to the first reward determination scheme, as shown in Table 2.

According to various embodiments, the RIC 101 may change the reward determination scheme corresponding to the first operation determination model in operation 1107. For example, the RIC 101 may receive a new reward determination scheme, and a method of changing a reward determination scheme is not limited. For example, it is assumed that the reward determination scheme is changed from the first reward determination scheme corresponding to the product of the value of the first parameter and the value of the third parameter to a second reward determination scheme corresponding to the product of the value of the second parameter and the value of the third parameter. In operation 1109, the RIC 101 may identify a request for experience data for learning the first operation determination model.

According to various embodiments, in operation 1111, the RIC 101 may provide, to the first learning learner, second experience data including a value corresponding to the at least one first parameter corresponding to the first operation determination model, information associated with an operation, and a second reward based on the second reward determination scheme. For example, for the same KPI table (e.g., the KPI table of Table 1), the RIC 101 may produce experience data as shown in Table 5 according to the changed reward determination scheme.

**[Table 5]**

| Experience data | State before performing action | Action | State after performing action | Reward |
|---|---|---|---|---|
| 1 | {1.2, 230, 0.2} | Config#1 | {1.3, 242, 0.19} | 1.3 * 242 |
| 2 | {1.3, 242, 0.19} | Config#2 | {1.4, 236, 0.18} | 1.4 * 236 |
| 3 | {1.4, 236, 0.18} | Config#2 | {1.5, 209, 0.17} | 1.5 * 209 |
| 4 | {1.5, 209, 0.17} | Config#1 | {1.6, 220, 0.16} | 1.6 * 220 |

As described above, the RIC 101 may more flexibly change a reward determination scheme, compared to a comparative example. According to the comparative example, a reward determination scheme is stored in an RL agent, and thus, the reward determination scheme is not changeable without changing the RL agent. However, according to various embodiments, a reward determination scheme may be changeable and thus, experience data according to the changed reward determination scheme may be obtained. According to various example embodiments, an example method of operating an electronic device may include: storing at least one value corresponding to each of at least one parameter associated with a radio access network (RAN), and information associated with an operation performed by the RAN. A value corresponding to at least some parameters among the at least one parameter may be used when at least one operation determination model executed by the electronic device determines at least a part of the information associated with the operation. The method of the electronic device may further include: identifying a request for experience information for learning a first operation determination model from a first learning learner for learning the first operation determination model among the at least one operation determination model, identifying, among the at least one value, a value corresponding to at least one first parameter corresponding to the first operation determination model and information associated with an operation corresponding to the at least one first parameter, in response to the request, and providing at least some among the value corresponding to the at least one first parameter, the information associated with the operation corresponding to the at least one first parameter, and a reward value identified based on at least a part of the value corresponding to the at least one first parameter, to the first learning learner as the experience information.

According to various example embodiments, the operation of storing the at least one value corresponding to each of the at least one parameter associated with the RAN, and the information associated with the operation performed by the RAN may classify and store, for each of a plurality of points in time, the at least one value corresponding to each of the at least one parameter and the information associated with the operation performed by the RAN.

According to various example embodiments, the example method of operating the electronic device may further include: obtaining, from the first learning learner, a first operation determination model updated based on the provided experience information, obtaining a new value corresponding to the at least one first parameter from the RAN, obtaining information associated with a new operation which is a result obtained by applying the new value corresponding to the at least one first parameter to the updated first operation determination model, and providing the information associated with the new operation to the RAN.

According to various example embodiments, the example method of operating the electronic device may further include: obtaining, from the first learning learner, the first operation determination model updated based on the provided experience information, identifying a parameter used by the updated first operation determination model as at least one second parameter which is at least partially different from the at least one first parameter, obtaining a value corresponding to the at least one second parameter from the RAN, obtaining information associated with a new operation which is a result obtained by applying the value corresponding to the at least one second parameter to the updated first operation determination model, and providing the information associated with the new operation to the RAN.

According to various example embodiments, the example method of operating the electronic device may further include: identifying a new request for experience information for learning the first operation determination model, identifying a value corresponding to the at least one second parameter and information associated with an operation corresponding to the at least one second parameter, in response to the new request, and providing, as new experience information, at least some among the value corresponding to the at least one second parameter, the information associated with the operation corresponding to the at least one second parameter, and a reward value identified based on at least a part of the value corresponding to the at least one second parameter.

According to various example embodiments, in response to the request, the operation of identifying the value corresponding to the at least one first parameter corresponding to the first operation determination model among the at least one value and the information associated with the operation corresponding to the at least one first parameter may include: identifying whether at least one value corresponding to each of the at least one parameter supports the at least one first parameter, and based on the at least one first parameter being supported, identifying the value corresponding to the at least one first parameter corresponding to the first operation determination model and the information associated with the operation corresponding to the at least one first parameter.

According to various example embodiments, the operation of providing at least some among the value corresponding to the at least one first parameter, the information associated with the operation corresponding to the at least one first parameter, and the reward value identified based on at least a part of the value corresponding to the at least one first parameter to the first learning learner as the experience information may provide the value corresponding to the at least one first parameter, the information associated with the operation corresponding to the at least one first parameter, and the entirety of the value corresponding to the at least one first parameter, and the entirety of a reward value identified based on the entirety to the first learning learner as the experience information.

According to various example embodiments, the operation of providing at least some among the value corresponding to the at least one first parameter, the information associated with the operation corresponding to the at least one first parameter, and the reward value identified based on at least a part of the value corresponding to the at least one first parameter to the first learning learner as the experience information may include: selecting a part among the value corresponding to the at least one first parameter, the information associated with the operation corresponding to the at least one first parameter, and the value corresponding to the at least one first parameter, and providing the selected part and a reward value identified based on the selected part to the first learning learner as the experience information.

According to various example embodiments, the operation of selecting the part among the value corresponding to the at least one first parameter, the information associated with the operation corresponding to the at least one first parameter, and the value corresponding to the at least one first parameter may select the value corresponding to the at least one first parameter, the information associated with the operation corresponding to the at least one first parameter, and the part of the value corresponding to the at least one first parameter based on at least one operation among selecting the part based on priority of each of the at least one first parameter, selecting the part based on a point in time at which each value corresponding to the at least one first parameter is obtained, or selecting the part in a random manner.

According to various example embodiments, the example method of operating the electronic device may further include: identifying the reward value based on a reward determination scheme and at least a part of the value corresponding to the at least one first parameter, and the reward determination scheme may be stored in advance in the electronic device or may be received by the electronic device.

According to various example embodiments, in response to the request, the operation of identifying the value corresponding to the at least one first parameter corresponding to the first operation determination model among the at least one value, and information associated with the operation corresponding to the at least one first parameter may include: identifying the at least one first parameter declared by the first operation determination model.

According to various example embodiments, in response to the request, the operation of identifying the value corresponding to the at least one first parameter corresponding to the first operation determination model among the at least one value, and the information associated with the operation corresponding to the at least one first parameter may include: identifying the at least one first parameter based on an external input.

According to various example embodiments, the experience information may include a value corresponding to the at least one first parameter at a first point in time, a first operation performed by the RAN at the first point in time, a value corresponding to the at least one first parameter at a second point in time after the first point in time according to a result of performing the first operation, and a reward value at the first point in time.

According to various example embodiments, an electronic device (e.g., the electronic device 101) may include: a storage device (e.g., the storage device 130), and at least one processor (e.g., the processor 120) operatively connected to the storage device, and the at least one processor is configured to: store, in the storage device, at least one value corresponding to each of at least one parameter associated with a radio access network (RAN), and information associated with an operation performed by the RAN. A value corresponding to at least some parameters among the at least one parameter may be used based on at least one operation determination model executed by the electronic device determining at least a part of the information associated with the operation. The at least one processor may be further configured to: identify a request for experience information for learning a first operation determination model from a first learning leaner for learning the first operation determination model among the at least one operation determination model, identify a value corresponding to at least one first parameter corresponding to the first operation determination model among the at least one value and information associated with an operation corresponding to the at least one first parameter in response to the request, and provide at least some among the value corresponding to the at least one first parameter, the information associated with the operation corresponding to the at least one first parameter, and a reward value identified based on at least a part of the value corresponding to the at least one first parameter, to the first learning learner as the experience information.

According to various example embodiments, as at least a part of the operation of storing the at least one value corresponding to each of the at least one parameter associated with the RAN, and the information associated with the operation performed by the RAN, the at least one processor may be configured to: classify and store, for each of a plurality of points in time, the at least one value corresponding to each of the at least one parameter and the information associated with the operation performed by the RAN.

According to various example embodiments, the at least one processor may be configured to: obtain, from the first learning learner, a first operation determination model updated based on the provided experience information, obtain a new value corresponding to the at least one first parameter from the RAN, obtain information associated with a new operation which is a result obtained by applying the new value corresponding to the at least one first parameter to the updated first operation determination model, and provide the information associated with the new operation to the RAN.

According to various example embodiments, the at least one processor may be configured to: obtain from the first learning learner, the first operation determination model updated based on the provided experience information, identify a parameter used by the updated first operation determination model as at least one second parameter which is at least partially different from the at least one first parameter, obtain a value corresponding to the at least one second parameter from the RAN, obtain information associated with a new operation which is a result obtained by applying the value corresponding to the at least one second parameter to the updated first operation determination model, and provide the information associated with the new operation to the RAN.

According to various example embodiments, the at least one processor may be further configured to: identify a new request for experience information for learning the first operation determination model, identify a value corresponding to the at least one second parameter and information associated with an operation corresponding to the at least one second parameter in response to the new request, and provide, as new experience information, at least some among the value corresponding to the at least one second parameter, information associated with the operation corresponding to the at least one second parameter, and a reward value identified based on at least a part of the value corresponding to the at least one second parameter.

According to various example embodiments, in response to the request, the at least one processor may be further configured to: identify the value corresponding to the at least one first parameter corresponding to the first operation determination model among the at least one value and information associated with the operation corresponding to the at least one first parameter, identify whether at least one value corresponding to each of the at least one parameter supports the at least one first parameter, and based on the at least one first parameter being supported, and identify the value corresponding to the at least one first parameter corresponding to the first operation determination model and the information associated with the operation corresponding to the at least one first parameter.

According to various example embodiments, as at least a part of the operation of providing at least some among the value corresponding to the at least one first parameter, the information associated with the operation corresponding to the at least one first parameter, and the reward value identified based on at least a part of the value corresponding to the at least one first parameter to the first learning learner as the experience information, the at least one processor may be configured to: provide the value corresponding to the at least one first parameter, the information associated with the operation corresponding to the at least one first parameter, and the entirety of the value corresponding to the at least one first parameter, and the entirety of a reward value identified based on the entirety to the first learning learner as the experience information.

According to various example embodiments, as at least a part of the operation of providing at least some among the value corresponding to the at least one first parameter, the information associated with the operation corresponding to the at least one first parameter, and the reward value identified based on at least a part of the value corresponding to the at least one first parameter to the first learning learner as the experience information, the at least one processor may be configured to: select a part among the value corresponding to the at least one first parameter, the information associated with the operation corresponding to the at least one first parameter, and the value corresponding to the at least one first parameter, and provide the selected part and a reward value identified based on the selected part to the first learning learner as the experience information.

According to various example embodiments, as at least a part of the operation of selecting the value corresponding to the at least one first parameter, the information associated with the operation corresponding to the at least one first parameter, and the part of the value corresponding to the at least one first parameter, the at least one processor may be configured to: select the value corresponding to the at least one first parameter, the information associated with the operation corresponding to the at least one first parameter, and the part of the value corresponding to the at least one first parameter based on at least one operation among an operation of: selecting the part based on priority of each of the at least one first parameter, selecting the part based on the point in time at which each value corresponding to the at least one first parameter is obtained, or selecting the part in a random manner.

According to various example embodiments, the at least one processor may be further configured to: identify the reward value based on a reward determination scheme and at least a part of the value corresponding to the at least one first parameter, and the reward determination scheme may be stored in advance in the electronic device or is received by the electronic device.

According to various example embodiments, in response to the request, as at least a part of the operation of identifying the value corresponding to the at least one first parameter corresponding to the first operation determination model among the at least one value, and information associated with the operation corresponding to the at least one first parameter, the at least one processor may be configured to identify the at least one first parameter declared by the first operation determination model.

According to various example embodiments, in response to the request, as at least a part of the operation of identifying the value corresponding to the at least one first parameter corresponding to the first operation determination model among the at least one value, and information associated with the operation corresponding to the at least one first parameter, the at least one processor may be configured to identify the at least one first parameter based on an external input.

According to various example embodiments, the experience information may include a value corresponding to the at least one first parameter at a first point in time, a first operation performed by the RAN at the first point in time, a value corresponding to the at least one first parameter at a second point in time after the first point in time according to a result of performing the first operation, and a reward value at the first point in time.

According to various example embodiments, an example method of operating an electronic device may include: storing a key performance indicator (KPI) table in which at least one value corresponding to each of at least one parameter associated with a radio access network (RAN), and information associated with an operation performed by the RAN are classified for each of a plurality of points of time. A value corresponding to at least some parameters among the at least one parameter may be used when at least one operation determination model executed by the electronic device determines at least a part of the information associated with the operation. The method of the electronic device may further include: detecting an event for updating a first operation determination model among the at least one operation determination model, identifying the value corresponding to at least one first parameter corresponding to the first operation determination model and information associated with an operation corresponding to the at least one first parameter by referring to the KPI in response to the event detection; and providing at least some among the value corresponding to the at least one first parameter, the information associated with the operation corresponding to the at least one first parameter, and a reward value identified based on at least a part of the value corresponding to the at least one first parameter, to a first learning leaner for learning the first operation determination model as the experience information.

According to various example embodiments, the detecting the event for updating the first operation determination model may detect the event based on the fact that a threshold period elapses from a point in time at which another experience information produced by the electronic device is provided, before the experience information.

According to various example embodiments, the detecting the event for updating the first operation determination model may detect the event based on the fact that at least a part of the value corresponding to the at least one first parameter satisfies a designated condition.

According to various example embodiments, the detecting the event for updating the first operation determination model may detect the event based on a request from the first learning learner and/or an external input.

According to various example embodiments, an electronic device (e.g., the electronic device 101) may include: a storage device (e.g., the storage device 130), and at least one processor (e.g., the processor 120) operatively connected to the storage device, and the at least one processor may be configured to: store, in the storage device, a key performance indicator (KPI) table in which at least one value corresponding to each of at least one parameter associated with a radio access network (RAN), and information associated with an operation performed by the RAN are classified for each of a plurality of points in time. A value corresponding to at least some parameters among the at least one parameter may be used when at least one operation determination model executed by the electronic device determines at least a part of the information associated with the operation. The at least one processor may be configured to: detect an event for updating a first operation determination model among the at least one operation determination model, identify the value corresponding to at least one first parameter corresponding to the first operation determination model and information associated with an operation corresponding to the at least one first parameter by referring to the KPI in response to the event detection, and provide at least some among the value corresponding to the at least one first parameter, the information associated with the operation corresponding to the at least one first parameter, and a reward value identified based on at least a part of the value corresponding to the at least one first parameter, to a first learning leaner for learning the first operation determination model as the experience information.

According to various example embodiments, as at least a part of the detecting the event for updating the first operation determination model, the at least one processor may be configured to detect the event based on a threshold period elapsing from the point in time at which another experience information produced by the electronic device is provided, before the experience information.

According to various example embodiments, as at least a part of the detecting the event for updating the first operation determination model, the at least one processor may be configured to detect the event based on at least a part of the value corresponding to the at least one first parameter satisfying a designated condition.

According to various example embodiments, as at least a part of the detecting the event for updating the first operation determination model, the at least one processor may be configured to detect the event in response to a request from the first learning learner and/or based on an external input.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A method of operating an electronic device, the method comprising:
storing at least one value corresponding to each of at least one parameter associated with a radio access network (RAN), and information associated with an operation performed by the RAN, wherein, a value corresponding to at least some parameters among the at least one parameter is used based on at least one operation determination model executed by the electronic device determining at least a part of the information associated with the operation;
identifying a request for experience information for learning a first operation determination model from a first learning learner for learning the first operation determination model among the at least one operation determination model;
in response to the request, identifying, among the at least one value, a value corresponding to at least one first parameter corresponding to the first operation determination model and information associated with an operation corresponding to the at least one first parameter; and
providing at least some among the value corresponding to the at least one first parameter, the information associated with the operation corresponding to the at least one first parameter, and a reward value identified based on at least a part of the value corresponding to the at least one first parameter, to the first learning learner as the experience information.

2. The method of claim 1, wherein the storing of the at least one value corresponding to each of the at least one parameter associated with the RAN, and the information associated with the operation performed by the RAN comprises:
classifying and storing, for each of a plurality of points in time, the at least one value corresponding to each of the at least one parameter and the information associated with the operation performed by the RAN.

3. The method of claim 1, further comprising:
obtaining, from the first learning learner, a first operation determination model updated based on the provided experience information;
obtaining a new value corresponding to the at least one first parameter from the RAN;
obtaining information associated with a new operation which is a result obtained by applying the new value corresponding to the at least one first parameter to the updated first operation determination model; and
providing the information associated with the new operation to the RAN.

4. The method of claim 1, further comprising:
obtaining, from the first learning learner, the first operation determination model updated based on the provided experience information;
identifying a parameter used by the updated first operation determination model as at least one second parameter which is at least partially different from the at least one first parameter;
obtaining a value corresponding to the at least one second parameter from the RAN;
obtaining information associated with a new operation which is a result obtained by applying the value corresponding to the at least one second parameter to the updated first operation determination model; and
providing the information associated with the new operation to the RAN.

5. The method of claim 4, further comprising:
identifying a new request for experience information for learning the first operation determination model;
in response to the new request, identifying a value corresponding to the at least one second parameter and information associated with an operation corresponding to the at least one second parameter; and
providing, as new experience information, at least some among the value corresponding to the at least one second parameter, the information associated with the operation corresponding to the at least one second parameter, and a reward value identified based on at least a part of the value corresponding to the at least one second parameter.

6. The method of claim 1, wherein, in response to the request, the identifying of the value corresponding to the at least one first parameter corresponding to the first operation determination model among the at least one value and the information associated with the operation corresponding to the at least one first parameter comprises:
identifying whether at least one value corresponding to each of the at least one parameter supports the at least one first parameter, and
based on the at least one first parameter being supported, identifying the value corresponding to the at least one first parameter corresponding to the first operation determination model and the information associated with the operation corresponding to the at least one first parameter.

7. The method of claim 1, wherein the providing of at least some among the value corresponding to the at least one first parameter, the information associated with the operation corresponding to the at least one first parameter, and the reward value identified based on at least a part of the value corresponding to the at least one first parameter to the first learning learner as the experience information comprises:
providing the value corresponding to the at least one first parameter, the information associated with the operation corresponding to the at least one first parameter, and an entirety of the value corresponding to the at least one first parameter, and an entirety of a reward value identified based on the entirety to the first learning learner as the experience information.

8. The method of claim 1, wherein the providing of at least some among the value corresponding to the at least one first parameter, the information associated with the operation corresponding to the at least one first parameter, and the reward value identified based on at least a part of the value corresponding to the at least one first parameter to the first learning learner as the experience information comprises:
selecting a part among the value corresponding to the at least one first parameter, the information associated with the operation corresponding to the at least one first parameter, and the value corresponding to the at least one first parameter, and
providing the selected part and a reward value identified based on the selected part to the first learning learner as the experience information.

9. The method of claim 8, wherein the selecting of the value corresponding to the at least one first parameter, the information associated with the operation corresponding to the at least one first parameter, and the part of the value corresponding to the at least one first parameter comprises;
selecting the part among the value corresponding to the at least one first parameter, the information associated with the operation corresponding to the at least one first parameter, and the value corresponding to the at least one first parameter based on at least one operation among: selecting the part based on priority of each of the at least one first parameter, selecting the part based on a point in time at which each value corresponding to the at least one first parameter is obtained, or selecting the part in a random manner.

10. The method of claim 1, further comprising:
identifying the reward value based on a reward determination scheme and at least a part of the value corresponding to the at least one first parameter,
wherein the reward determination scheme is stored in advance in the electronic device or is received by the electronic device.

11. The method of claim 1, wherein, in response to the request, the identifying of the value corresponding to the at least one first parameter corresponding to the first operation determination model among the at least one value, and the information associated with the operation corresponding to the at least one first parameter comprises;
identifying the at least one first parameter declared by the first operation determination model.

12. The method of claim 1, wherein, in response to the request, the identifying of the value corresponding to the at least one first parameter corresponding to the first operation determination model among the at least one value, and the information associated with the operation corresponding to the at least one first parameter comprises;
identifying the at least one first parameter based on an external input.

13. An electronic device, comprising:
a storage device; and
at least one processor operatively connected to the storage device,
wherein the at least one processor is configured to:
store, in the storage device, at least one value corresponding to each of at least one parameter associated with a radio access network (RAN), and information associated with an operation performed by the RAN, wherein, a value corresponding to at least some parameters among the at least one parameter is used based on at least one operation determination model executed by the electronic device determining at least a part of the information associated with the operation,
identify a request for experience information for learning a first operation determination model from a first learning leaner for learning the first operation determination model among the at least one operation determination model;
in response to the request, identify a value corresponding to at least one first parameter corresponding to the first operation determination model among the at least one value and information associated with an operation corresponding to the at least one first parameter; and
provide at least some among the value corresponding to the at least one first parameter, the information associated with the operation corresponding to the at least one first parameter, and a reward value identified based on at least a part of the value corresponding to the at least one first parameter, to the first learning learner as the experience information.

14. The electronic device of claim 13, wherein, in response to the request, as at least a part of the identifying of the value corresponding to the at least one first parameter corresponding to the first operation determination model among the at least one value and the information associated with the operation corresponding to the at least one first parameter,
the at least one processor is configured to: identify whether at least one value corresponding to each of the at least one parameter supports the at least one first parameter, and
based on the at least one first parameter being supported, identify the value corresponding to the at least one first parameter corresponding to the first operation determination model and the information associated with the operation corresponding to the at least one first parameter.

15. The electronic device of claim 13, wherein, as at least a part of the providing of at least some among the value corresponding to the at least one first parameter, the information associated with the operation corresponding to the at least one first parameter, and the reward value identified based on at least a part of the value corresponding to the at least one first parameter to the first learning learner as the experience information,
the at least one processor is configured to: select a part among the value corresponding to the at least one first parameter, the information associated with the operation corresponding to the at least one first parameter, and the value corresponding to the at least one first parameter, and
provide the selected part and a reward value identified based on the selected part to the first learning leaner as the experience information.
